(19)

Europäisches
Patentamt
European
Patent Office
Office européen
des brevets

(11)  **EP 3 570 248 A1**

(12)  # EUROPEAN PATENT APPLICATION

(43) Date of publication:
**20.11.2019  Bulletin 2019/47**

(51) Int Cl.:
**G06T 5/00** *(2006.01)*    **G06T 5/20** *(2006.01)*

(21) Application number: **18305592.0**

(22) Date of filing: **14.05.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital CE Patent Holdings
75017 Paris (FR)**

(72) Inventors:
- **CRIVELLI, Tomas Enrique
  35576 Cesson-Sévigné (FR)**
- **OZEROV, Alexey
  35576 Cesson-Sévigné (FR)**
- **CHEN, Pei I
  35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54)  **METHOD AND APPARATUS FOR PROCESSING A VIDEO CONTENT BASED ON
CONFIDENCE-AWARE GUIDED VIDEO FILTERING AND CORRESPONDING COMPUTER
READABLE PROGRAM PRODUCT AND COMPUTER READABLE STORAGE MEDIUM**

(57)    A method includes:
- computing a linear regression model based on a confidence-aware guided image filtering algorithm over a spatio-temporal set of windows ($\omega_{t,k}$) comprising a first spatial window of a first frame ($t$) and at least one second spatial window of at least one second frame ($t$-$2$, $t$-$1$, $t$+$1$, $t$+$2$), the first and at least one second frames being neighboring frames of a video content comprising temporally successive frames, all windows of the spatio-temporal set of windows containing a same pixel with index $k$;
- computing a filtered value ($p_{t,k}$) for the pixel with index $k$ in the first frame ($t$) by applying the computed linear regression model to the spatio-temporal set of windows ($\omega_{t,k}$).

The present disclosure also relates to the corresponding apparatus, computer readable program product and computer readable storage medium.

Figure 2

**EP 3 570 248 A1**

**Description**

**1. Technical field**

The present disclosure relates to a method of processing images, notably when they are successive frames of a video content. The present disclosure more precisely relates to a method of filtering such video contents, and notably finds application in the context of post-processing for alpha matting.

The present disclosure also relates to the corresponding apparatus, computer readable program product and computer readable storage medium.

**2. Background**

Guided image filtering was first described by He et al. in the article "Guided Image Filtering" in IEEE Transactions on Pattern Analysis and Machine Intelligence, vol. 3, 2013. It performs smoothing of an image, using the content of a second image, called a *guidance image,* to influence the filtering. The guidance image can be the image itself, a different version of the image, or a completely different image. Guided image filtering is a neighborhood operation, like other filtering operations, but takes into account the statistics of a region (usually a rectangular patch) in the corresponding spatial neighborhood in the guidance image when calculating the value of the output pixel.

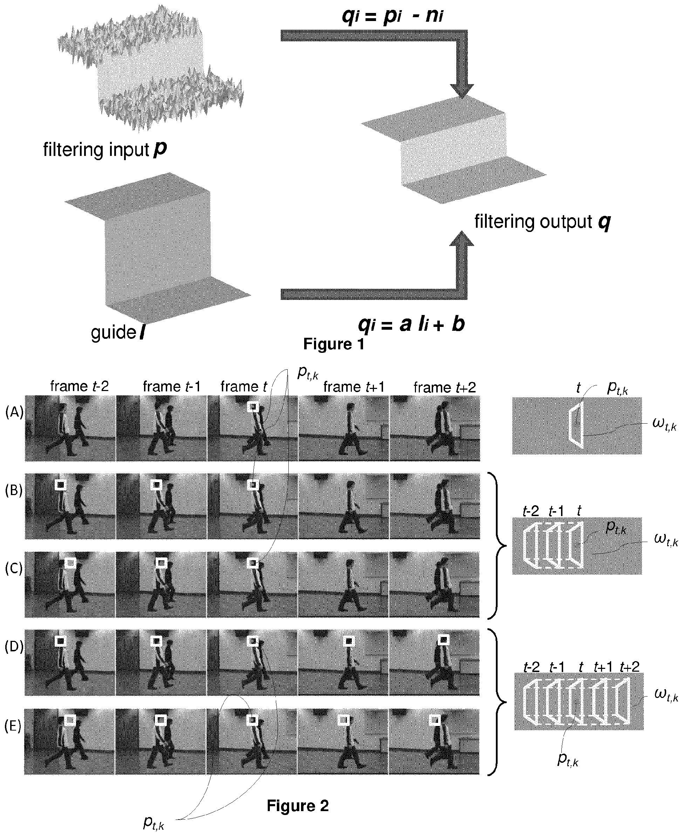

In summary, a guided image filtering computes within each local region a linear regression model between a guidance image, or guide, *I* and an input image p to be filtered, and then the output filtered image color q is regressed from the guidance image using the estimated model. This allows for example preserving the edges, as in the guidance image *I*, while removing a noise, thus not oversmoothing the edges. **Figure 1** provides an exemplary visualization of guided image filtering. Note that both the input p and the guidance *I* images may be independently either gray scale or color, leading to four possible combinations. The value $q_i$ of pixel *i* in the output image q is both expressed as:

$q_i = p_i - n_i$, where $p_i$ is the value of pixel *i* in the input image p and with $n_i$ a noise affecting pixel *i*, and
$q_i = aI_i + b$, where $I_i$ is the value of pixel *i* in the guidance image *I*, with a and b scalar coefficients assumed constant in a local window that contains pixel *i*. The Guided Image Filter's key assumption is hence a linear transform between the intensities of the guiding image *I* and the filter output q in a local window that contains pixel *i*. To determine the linear coefficients, the Guided Image Filter seeks a solution that minimizes the difference between q and the filter input p in a minimum least squares fashion.

The guided image filtering has an important range of applications in image processing including image denoising, image dehazing, post-processing for alpha matting, etc.

Recently, a so-called confidence-aware guided image filtering has been introduced by Horentrup et al. in "Confidence-aware guided image filter", Image Processing (ICIP), 2014, IEEE International Conference. It consists in performing guided image filtering while taking into account a confidence value associated to each pixel in the image. This way the pixels with higher confidence values contribute more into the final output than the pixels with lower confidence values. These confidence values may be either set manually, e.g., when the guidance and/or the input image includes some unwanted pixels that should not be taken into consideration, or they may be provided by some algorithm, e.g., as in the case of guided image filtering applied as a post-processing for alpha matting, where the confidence values may be for example provided by the global sampling matting algorithm, as described by He et al. in "A global sampling method for alpha matting" Computer Vision and Pattern Recognition (CVPR), 2011 IEEE Conference on. IEEE, 2011.

Though promising, the confidence-aware guided image filtering is strictly limited to image processing, and was not extended to the video processing, except its trivial application, where the guided image filtering is independently applied to each frame in the video. However, applying guided image filtering independently to each frame of a video content raises several problems, among which:

1. *Temporal inconsistency:* Due to the independent processing, the resulting filtered video sequence may suffer from temporal inconsistency leading, e.g., to a so-called flickering effect.
2. *Low overall quality:* With this frame-wise processing the overall quality of the filtered video is not as high as it could be.

There is hence a need for a confidence-aware guided video filtering scheme that would be well adapted to the filtering of video content, and hence solve the problem of temporal inconsistency, while improving the overall quality of the filtered video content.

### 3. Summary

In one aspect, at least one embodiment of the present disclosure relates to a method that comprises:

- computing a linear regression model based on a confidence-aware guided image filtering algorithm over a spatio-temporal set of windows comprising a first spatial window of a first frame and at least one second spatial window of at least one second frame, said first and at least one second frames being neighboring frames of a video content comprising temporally successive frames, all windows of said spatio-temporal set of windows containing a same pixel with index k;
- computing a filtered value for said pixel with index k in said first frame by applying said computed linear regression model to said spatio-temporal set of windows.

In another aspect, at least one embodiment of the present disclosure relates to an apparatus that comprises:

- a processor for computing a linear regression model based on a confidence-aware guided image filtering algorithm over a spatio-temporal set of windows comprising a first spatial window of a first frame and at least one second spatial window of at least one second frame, said first and at least one second frames being neighboring frames of a video content comprising temporally successive frames, all windows of said spatio-temporal set of windows containing a same pixel with index k;
- a processor for computing a filtered value for said pixel with index k in said first frame by applying said computed linear regression model to said spatio-temporal set of windows.

### 4. Brief description of drawings

The present disclosure can be better understood with reference to the following description and drawings, given by way of example and not limiting the scope of protection, and in which:

- **Figure 1,** already described in relation to the prior art, depicts some techniques of guided image filtering;
- **Figure 2** ((A) to (E)) illustrates various definitions of the regression model estimation region $\omega_{t,k}$, according to at least some embodiments of the present disclosure;
- **Figure 3** illustrates an alternate embodiment, according to which the spatial windows of the spatio-temporal set of windows $\omega_{t,k}$ defining the model computation region might be of different sizes;
- **Figure 4** provides a flow chart for a confidence-aware guided image filtering algorithm of a video content, according to at least some embodiments of the present disclosure;
- **Figure 5** provides a schematic view of an apparatus for processing video content according to at least some embodiments of the present disclosure.

The components in the figures are not necessarily to scale, emphasis instead being placed upon illustrating some embodiments of the present disclosure.

### 5. Description of embodiments

The general principle of the present disclosure relies on a confidence-aware guided image filtering of video content, which takes account of one or several neighboring frame(s), within the video content, to filter a current frame.

Instead of computing a regression model over a rectangular spatial 2D patch, (that could be denoted as $\omega_k$), embodiments of the present disclosure comprise computing a regression model over a spatio-temporal 3D box $\omega_{t,k}$ that includes 2D patches from few consecutive previous frames or 2D patches from both previous and next frames.

**Figure 2** ((A) to (E)) illustrates various definitions of the regression model estimation region $\omega_{t,k}$, according to at least some embodiments of the present disclosure.

As a mere illustrative example, five temporally successive frames of a video content are illustrated on each line (A) to (E) of **figure 2.** The central frame with temporal index t is the one to be filtered. Two directly previous frames bear temporal indices *t-2* and *t-1,* and two directly following frames bear temporal indices *t+1* and *t+2.* Of course, more or less neighboring frames may be taken into account, while filtering frame t.

The first line (A) of **figure 2** illustrates a conventional confidence-aware guided image filtering, according to which the regression model used to derive the value of filtered pixel $p_{t,k}$ in frame *t* is computed over a rectangular spatial 2D patch, denoted $\omega_{t,k}$, which comprises pixel of index k in frame t.

Lines (B) to (E) of **figure 2** illustrate several variants of spatio-temporal 3D box definition $\omega_{t,k}$, over which the regression model of the confidence-aware guided image filtering algorithm is computed according to embodiments of the present disclosure.

According to embodiments (B) and (C), the spatio-temporal set of windows used to derive the regression model only comprises 2D spatial windows, or patches (shown as rectangular windows on **figure 2**), from few previous frames (in the example of **figure 2**(B) and (C), spatial windows containing pixel k in previous neighboring frames *t-2* and *t-1* are used). Such an implementation, which may be called *online implementation,* allows treating the video content sequentially, as frames arrive one after another.

For example, such a functionality might be useful in case of post-processing of alpha matting, where the user input regarding at least one uncertainty zone, (like for instance alpha matting trimaps described by He et al. in the article "A global sampling method for alpha matting." Computer Vision and Pattern Recognition (CVPR), 2011 IEEE Conference on. IEEE, 2011) are only available up to the current frame t, and not for the next frames, which does not allow computing alpha matting for the next frames.

According to embodiments (D) and (E), the spatio-temporal set of windows used to derive the regression model can comprise 2D spatial windows, or patches, from both previous and next neighboring frames (in the example of **figure 2**(D) and (E), spatial windows containing pixel k in both previous neighboring frames *t-2* and *t-1* and next neighboring frames *t+1* and *t+2* are used). Such an implementation, which may be called *batch implementation,* might lead to better results than the *online implementation,* since it exploits more information coming from the next frames. For example, in case of alpha matting post-processing, this implementation may be run at a final rendering stage, when the user-provided trimaps are built for all frames in the video.

The online implementation may however be applied in more use cases than the batch one.

According to embodiments (C) and (E), the positions of the spatial windows in the previous and/or next frames in the video content are the same as in the current frame *t* to be processed. Such embodiments correspond to a *fixed spatial patch position.*

To the contrary, according to embodiments (B) and (D) in **figure 2,** the positions of the spatial windows, or patches, in the previous and/or next frames can be estimated from some considerations, e.g. they can follow the motion of at least one object in the frames. For example, the positions of these patches may be estimated by a template match algorithm or following some optical flow estimation. Such embodiments correspond to a *varying spatial patch position.*

The latter exemplary implementation (*varying patch position*) might lead to a better result in some cases than the former one (*fixed patch position),* since it exploits temporal dynamics of the video. However, the former implementation might be much faster, since it does not require any additional computations (e.g., optical flow computation that might be quite computationally demanding).

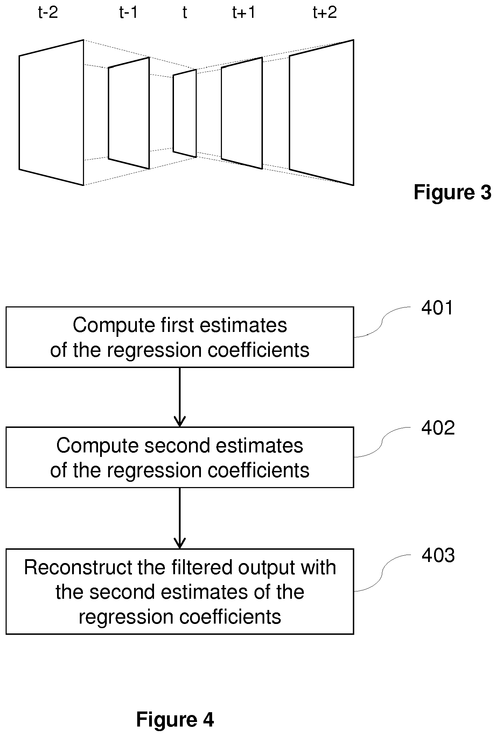

In the exemplary embodiment of **Figure 3,** the spatial windows of the spatio-temporal set of windows $\omega_{t,k}$ defining the model computation region have all the same size (as illustrated by the right part of **figure 2**).

**Figure 3** illustrates an alternate embodiment, according to which the spatial windows of the spatio-temporal set of windows $\omega_{t,k}$ defining the model computation region might be of different sizes. For example, as illustrated in **figure 3,** one can consider larger patches in previous/next frames than in the current frame t. Such an embodiment, which considers larger patches in previous and/or next frames, as compared to the current frame, may allow avoiding motion estimation, as disclosed in embodiment (B) and (D) of **figure 2.**

**Figure 4** provides a flow chart for a confidence-aware guided image filtering algorithm of a video content, according to an embodiment of the present disclosure.

The below embodiment is described, as a mere illustrative example, in the case of a color guidance video (where each pixel is represented by a 3-dimentional vector of RGB (for Red, Green, Blue) components) and of a grayscale filtered video (where each pixel is represented by a scalar), e.g., as shown in **Figure 1.** It must be noted that, in case of a grayscale guidance video the implementation is much simpler, and in case of a color filtered video the same algorithm should be applied to each color channel independently.

Let us introduce the following notations that are consistent with those from the above-mentioned articles by *He et al.* and by *Horentrup et al.* (see also **Figure 1**), while assuming that the pixels in one video frame (image) are indexed just with one index k:

- $I_{t,k}$: guidance image pixel color, a $1 \times 3$ vector (for t-th frame and *k*-th pixel),
- $q_{t,k}$: input image pixel intensity, a scalar (for t-th frame and *k*-th pixel),
- $p_{t,k}$: output filtered image pixel intensity, a scalar (for t-th frame and *k*-th pixel),
- $c_{t,k}$: confidence value, a scalar (for t-th frame and *k*-th pixel),
- $\omega_{t,k}$: model estimation region, a set of spatio-temporal indices (for t-th frame and *k*-th pixel), see **Figure 2,**
- $a_{t,k}$ and $b_{t,k}$: regression coefficients, a $1 \times 3$ vector for $a_{t,k}$ and a scalar for $b_{t,k}$ (for t-th frame and *k*-th pixel),
- $w_{\tau,i}^{t,k}$: bilateral guidance image filter weights.

In order to improve the quality of the proposed approach, at least some embodiment can also rely on at least one of the following features:

- To control the influence of previous/next frames on the processing of a pixel in a current frame, the processing is weighted in time with temporal weights $\lambda_{t-\tau}$ (for example, more weight is given to the current frame, as compared to the previous and next frames, with more weight to the directly neighboring frames, by defining $\lambda_t = 1$, $\lambda_{t-1} = \lambda_{t+1}$ = 1/2 and $\lambda_{t-2} = \lambda_{t+2} = 1/4$) ;
- To improve the quality of the final filtering, the guidance image is averaged over a time-space region $\beta_{t,k}$ (this region may be different or similar to the model estimation region $\omega_{t,k}$ defined above) with a sort of bilateral filtering, which is a nonlinear edge-preserving filtering.

Notably, the exemplary embodiment of **figure 4** relies on both features.

The regression coefficients of the linear regression model can be estimated by minimizing the following cost function:

$$
E\left(\boldsymbol{a}_{t,k}, b_{t,k}\right) = \sum_{\tau,i\in\omega_{t,k}} \left( \lambda_{t-\tau} c_{\tau,i} \left( \boldsymbol{a}_{t,k}^T \boldsymbol{I}_{t,k} + b_{t,k} - p_{\tau,i} \right)^2 + \epsilon \left( \boldsymbol{a}_{t,k}^T \boldsymbol{1} \right)^2 \right),
$$

where $\epsilon$ is a small positive constant and **1** is a $1 \times 3$ vector of ones.

This leads to the algorithm of **figure 4,** according to which:

1. At step 401, first estimates of the regression coefficients can be computed as

$$
\tilde{\boldsymbol{a}}_{t,k} = \left( \tilde{\boldsymbol{\Sigma}}_{t,k} + \epsilon \boldsymbol{U} \right)^{-1} \left( \frac{\sum_{\tau,i\in\omega_{t,k}} \lambda_{t-\tau} c_{\tau,i} \boldsymbol{I}_{\tau,i} p_{\tau,i}}{\sum_{\tau,i\in\omega_{t,k}} \lambda_{t-\tau} c_{\tau,i}} - \tilde{\boldsymbol{I}}_{t,k} \tilde{p}_{t,k} \right),
$$

$$
\tilde{b}_{t,k} = \tilde{p}_{t,k} - \tilde{\boldsymbol{a}}_{t,k}^T \tilde{\boldsymbol{I}}_{t,k},
$$

where U is a $3 \times 3$ identity matrix, and

$$
\tilde{\boldsymbol{I}}_{t,k} = \frac{\sum_{\tau,i\in\omega_{t,k}} \lambda_{t-\tau} c_{\tau,i} \boldsymbol{I}_{\tau,i}}{\sum_{\tau,i\in\omega_{t,k}} \lambda_{t-\tau} c_{\tau,i}},
$$

$$
\tilde{p}_{t,k} = \frac{\sum_{\tau,i\in\omega_{t,k}} \lambda_{t-\tau} c_{\tau,i} p_{\tau,i}}{\sum_{\tau,i\in\omega_{t,k}} \lambda_{t-\tau} c_{\tau,i}},
$$

$$
\tilde{\boldsymbol{\Sigma}}_{t,k} = \frac{\sum_{\tau,i\in\omega_{t,k}} \lambda_{t-\tau} c_{\tau,i} \boldsymbol{I}_{\tau,i} \boldsymbol{I}_{\tau,i}^T}{\sum_{\tau,i\in\omega_{t,k}} \lambda_{t-\tau} c_{\tau,i}} - \tilde{\boldsymbol{I}}_{\tau,i} \tilde{\boldsymbol{I}}_{\tau,i}^T,
$$

2. At step 402, second (smoothed) estimates of the regression coefficients can be computed as

$$
\tilde{\tilde{\boldsymbol{a}}}_{t,k} = \frac{\sum_{\tau,i\in\omega_{t,k}} \lambda_{t-\tau} c_{\tau,i} \tilde{\boldsymbol{a}}_{\tau,i}}{\sum_{\tau,i\in\omega_{t,k}} \lambda_{t-\tau} c_{\tau,i}},
$$

$$\tilde{\tilde{b}}_{t,k} = \frac{\sum_{\tau,i \in \omega_{t,k}} \lambda_{t-\tau} c_{\tau,i} \tilde{b}_{\tau,i}}{\sum_{\tau,i \in \omega_{t,k}} \lambda_{t-\tau} c_{\tau,i}},$$

3. At step 403, the filtered output can be reconstructed as

$$q_{t,k} = \tilde{\tilde{b}}_{t,k} + \tilde{\tilde{a}}_{t,k}^T \bar{I}_{t,k}$$

where

$$\bar{I}_{t,k} = \frac{\sum_{\tau,i \in \beta_{t,k}} w_{\tau,i}^{t,k} I_{\tau,i}}{\sum_{\tau,i \in \beta_{t,k}} w_{\tau,i}^{t,k}},$$

and

$$w_{\tau,i}^{t,k} = \mu \exp\left(-\frac{\left\|I_{t,k} - I_{\tau,i}\right\|}{\sigma} - \gamma_{\tau,i}\right),$$

or

$$w_{\tau,i}^{t,k} = c_{\tau,i} \mu \exp\left(-\frac{\left\|I_{t,k} - I_{\tau,i}\right\|}{\sigma} - \gamma_{\tau,i}\right),$$

with $\mu$ and $\sigma$ being constants and $\gamma_{\tau,i}$ being some weights defined over the time-space region $\beta_{t,k}$.

In addition to the confidence values $c_{t,k}$, other weights might be considered within the regression model computation procedure, for example:

- one can lower or strengthen the influence of the patches in the previous/next frames,
- or some weights may be defined based on the similarity between the patches in current and previous/next frames.

Moreover, the temporal weights $\lambda_{t-\tau}$ may be adaptively defined. For example, in the embodiment (B) and (D) of **figure 2,** when motion estimation is used to define the spatial position of the spatial windows in the previous and/or next frames, it is possible to adapt the weights $\lambda_{t-\tau}$ as a function of a quality parameter of the motion estimation. Hence, in cases when the motion estimation is estimated as poor, the temporal weights of the neighboring frames may be lowered, as compared to the current frame t.

While not explicitly described, the present embodiments may be employed in any combination or sub-combination. For example, the algorithm of **figure 4** may be implemented in any of the embodiments (B) to (E) of **figure 2,** or may be combined with the embodiment of **figure 3.**

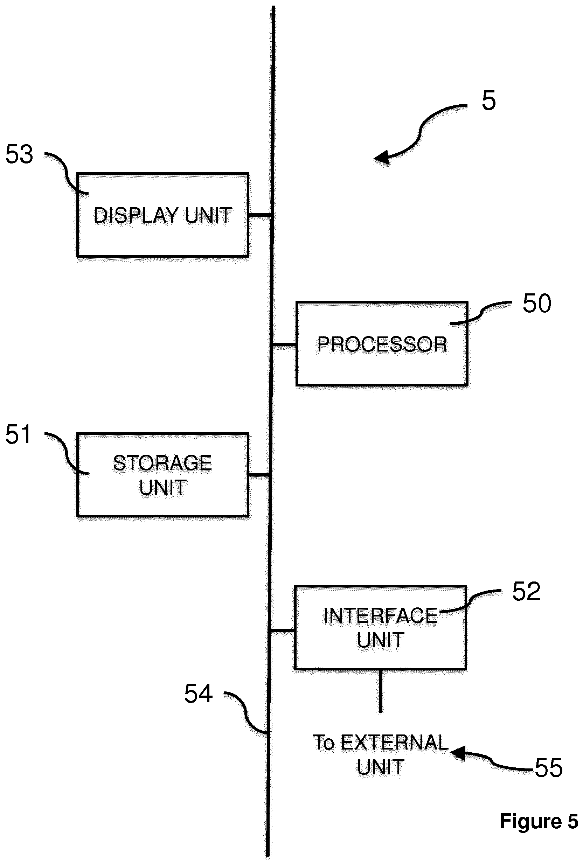

**Figure 5** schematically illustrates an apparatus according to embodiments of the present disclosure.

An apparatus 5 illustrated in **Figure 5** includes a processor 50, a storage unit 51, an interface unit 52, which are connected by a bus 54. It may also optionally comprise a display unit 53 for displaying the filtered video content. Of course, constituent elements of the computer apparatus 5 may be connected by a connection other than a bus connection using the bus 54.

The processor 50 controls operations of the apparatus 5. The storage unit 51 stores at least one program to be executed by the processor 50, and various data, including an input video content, parameters used by computations performed by the processor 50, intermediate data of computations performed by the processor 50, and so on. The storage unit 51 may notably store the regression coefficients of the linear regression model used for filtering the input video content. The processor 50 may be formed by any known and suitable hardware, or software, or by a combination of hardware and software. For example, the processor 50 may be formed by dedicated hardware such as a processing circuit, or by a programmable processing unit such as a CPU (Central Processing Unit) that executes a program stored in a memory thereof.

The storage unit 51 may be formed by any suitable storage or means capable of storing the program, data, or the like in a computer-readable manner. Examples of the storage unit 51 include non-transitory computer-readable storage media such as semiconductor memory devices, and magnetic, optical, or magneto-optical recording media loaded into a read and write unit. The program causes the processor 50 to perform a process for processing a video-content according to a confidence-aware guided-image filtering algorithm according to at least one embodiment of the present disclosure as described above with reference to **Figure 4.**

The interface unit 52 provides an interface between the apparatus 5 and at least one external apparatus. The interface unit 52 may be in communication with the at least one external apparatus via cable or wireless communication. In this embodiment, at least one of the external apparatus may be a video acquisition device 55. In this case, video content can be inputted from the video acquisition device 55 to the apparatus 5 through the interface unit 52, and then stored in the storage unit 51.

The apparatus 5 and the video acquisition device 55 may communicate with each other via cable or wireless communication.

Once filtered, the video content may be displayed on the display unit 53, which may include a screen.

Although only one processor 50 is shown on **Figure 5,** a skilled person will understand that the apparatus can comprise one or several processors. Furthermore, such a processor may comprise different modules and units embodying the functions carried out by the apparatus 5 according to embodiments of the present disclosure, such as a module, which computes the coefficients of the linear regression model based on a confidence-aware guided image filtering algorithm over a spatio-temporal set of windows comprising a first spatial window of a current frame and corresponding spatial window of neighboring next/previous frames, and a module, which computes a filtered value for each pixel $k$ in the current frame by applying the computed linear regression model to the spatio-temporal set of windows. These modules may also be embodied in several processors 50 communicating and co-operating with each other.

As will be appreciated by one skilled in the art, aspects of the present disclosure can be embodied as a system, method or computer readable medium. Accordingly, aspects of the present disclosure can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present disclosure can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present disclosure can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

Thus, for example, it will be appreciated by those skilled in the art that the block diagrams presented herein represent conceptual views of illustrative system components and/or circuitry according to some embodiments of the present disclosure. Similarly, it will be appreciated that any flow charts, flow diagrams, state transition diagrams, pseudocode, and the like represent various processes which may be substantially represented in computer readable storage media and so executed by a computer or processor, whether or not such computer or processor is explicitly shown.

At least one embodiment of the present disclosure relates to a method comprising:

- computing a linear regression model based on a confidence-aware guided image filtering algorithm over a spatio-temporal set of windows comprising a first spatial window of a first frame and at least one second spatial window of at least one second frame, said first and at least one second frames being neighboring frames of a video content comprising temporally successive frames, all windows of said spatio-temporal set of windows containing a same pixel with index k;
- computing a filtered value for said pixel with index k in said first frame by applying said computed linear regression model to said spatio-temporal set of windows.

In another aspect, at least one embodiment of the present disclosure relates to an apparatus comprising:

- a processor for computing a linear regression model based on a confidence-aware guided image filtering algorithm over a spatio-temporal set of windows comprising a first spatial window of a first frame and at least one second spatial window of at least one second frame, said first and at least one second frames being neighboring frames of a video content comprising temporally successive frames, all windows of said spatio-temporal set of windows containing a same pixel with index k;
- a processor for computing a filtered value for said pixel with index k in said first frame by applying said computed linear regression model to said spatio-temporal set of windows.

Hence, at least some embodiments of the present disclosure can provide a new and inventive approach to confidence-aware guide video filtering, which exploits the information from the neighboring frames to filter the current frame. Instead of computing the regression model over a rectangular spatial 2D patch, the present disclosure proposes computing it over a spatio-temporal 3D box, that includes 2D patches from few consecutive previous and/or next frames in the video content.

Such an approach can allow increasing the overall quality of the filtered video content, since more information (expressed in terms of both images and confidence values) coming from neighboring frames is used. It can also lead to a more temporally-consistent result than some prior art solutions, notably with less flickering.

In another aspect, said at least one second frame is preceding said first frame in said video content.

In another aspect, said spatio-temporal set of windows comprises second spatial windows of several second frames, among which at least one second frame directly precedes said first frame in said video content and at least one second frame directly follows said first frame in said video content.

In yet another aspect, a position of said first spatial window in said first frame is the same as a position of said at least one second spatial window in said at least one second frame.

In yet another aspect, a position of said at least one second spatial window in said at least one second frame varies according to a motion, in at least a portion of said video content, of at least one object present in said first spatial window.

In yet another aspect, said first spatial window and at least one of said at least one second spatial windows have different sizes.

In yet another aspect, at least one of said at least one second spatial windows is larger than said first spatial window.

In a further aspect, computing said linear regression model takes into account temporal weights depending on a temporal distance between said first frame and at least one of said at least one second frame in said video content.

In a further aspect, computing said linear regression model takes into account weights depending on a similarity between said first spatial window and at least one of said at least one second spatial window.

According to a further aspect, said confidence-aware guided image filtering algorithm takes into account both a guidance video and confidence values associated to pixels of said video content, and said guidance video is averaged over a time-space region.

According to yet a further aspect, said guidance video is a portion of said video content.

While not explicitly described, the apparatus of the present disclosure can be adapted to perform the method of the present disclosure in any of its embodiments.

While not explicitly described, the present embodiments related to a method or to the corresponding apparatus can be employed in any combination or sub-combination.

The present disclosure also concerns a computer program product comprising software code instructions for performing the above-disclosed method, when the computer program is executed by a processor, and a computer readable storage medium comprising such a computer program product.

**Claims**

1. A method comprising:

   - computing a linear regression model based on a confidence-aware guided image filtering algorithm over a spatio-temporal set of windows ($\omega_{t,k}$) comprising a first spatial window of a first frame (t) and at least one second spatial window of at least one second frame (*t-2, t-1, t+1, t+2*), said first and at least one second frames being neighboring frames of a video content comprising temporally successive frames, all windows of said spatio-temporal set of windows containing a same pixel with index k;
   - computing (403) a filtered value ($p_{t,k}$) for said pixel with index k in said first frame *(t)* by applying said computed linear regression model to said spatio-temporal set of windows $(\omega_{t,k})$.

2. An apparatus comprising:

   - a processor for computing a linear regression model based on a confidence-aware guided image filtering algorithm over a spatio-temporal set of windows comprising a first spatial window of a first frame and at least one second spatial window of at least one second frame, said first and at least one second frames being neighboring frames of a video content comprising temporally successive frames, all windows of said spatio-temporal set of windows containing a same pixel with index *k*;
   - a processor for computing a filtered value for said pixel with index k in said first frame by applying said computed linear regression model to said spatio-temporal set of windows.

3. The method of claim 1 or the apparatus of claim 2, **wherein** said at least one second frame *(t-2, t-1)* is preceding said first frame *(t)* in said video content.

4. The method or the apparatus of any one of claim 1 to 3, **wherein** said spatio-temporal set of windows $(\omega_{t,k})$ comprises second spatial windows of several second frames, among which at least one second frame *(t-1)* directly precedes said first frame *(t)* in said video content and at least one second frame *(t+1)* directly follows said first frame *(t)* in said video content.

5. The method or the apparatus of any one of claims 1-4, **wherein** a position of said first spatial window in said first frame is the same as a position of said at least one second spatial window in said at least one second frame.

6. The method or the apparatus of any one of claims 1-4, **wherein** a position of said at least one second spatial window in said at least one second frame varies according to a motion, in at least a portion of said video content, of at least one object present in said first spatial window.

7. The method or the apparatus of any one of claims 1-6, **wherein** said first spatial window and at least one of said at least one second windows have different sizes.

8. The method or the apparatus of claim 7, **wherein** at least one of said at least one second windows is larger than said first spatial window.

9. The method or the apparatus of any one of claims 1-8, **wherein** computing said linear regression model takes into account temporal weights $(\lambda_{t-\tau})$ depending on a temporal distance $(\tau)$ between said first frame and at least one of said at least one second frame in said video content.

10. The method or the apparatus of any one of claims 1-9, **wherein** computing said linear regression model takes into account weights depending on a similarity between said first spatial window and at least one of said at least one second spatial window.

11. The method or the apparatus of any one of claims 1-10, **wherein** said confidence-aware guided image filtering algorithm takes into account both a guidance video and confidence values $(c_{t,k})$ associated to pixels of said video content, and **wherein** said guidance video is averaged over a time-space region $(\beta_{t,k})$.

12. The method or the apparatus of claim 11, **wherein** said guidance video is a portion of said video content.

13. A computer program product comprising software code instructions for performing the method according to any one of claims 1 to 12, when the computer program is executed by a processor.

14. A computer readable storage medium comprising a computer program product according to claim 13.

$$q_i = p_i - n_i$$

filtering input $p$

filtering output $q$

guide $I$

$$q_i = a\, l_i + b$$

**Figure 1**

$p_{t,k}$

frame $t$-2　　frame $t$-1　　frame $t$　　frame $t$+1　　frame $t$+2

(A)

$t$　$p_{t,k}$

$\omega_{t,k}$

(B)

(C)

$t$-2　$t$-1　$t$

$p_{t,k}$

$\omega_{t,k}$

(D)

(E)

$t$-2　$t$-1　$t$　$t$+1　$t$+2

$\omega_{t,k}$

$p_{t,k}$

**Figure 2**

$p_{t,k}$

t-2    t-1    t    t+1    t+2

**Figure 3**

Compute first estimates
of the regression coefficients — 401

Compute second estimates
of the regression coefficients — 402

Reconstruct the filtered output with
the second estimates of the
regression coefficients — 403

**Figure 4**

Figure 5

Europäisches
Patentamt

European
Patent Office

Office européen
des brevets

# EUROPEAN SEARCH REPORT

Application Number

EP 18 30 5592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HOSNI ASMAA ET AL: "Temporally Consistent Disparity and Optical Flow via Efficient Spatio-temporal Filtering", 20 November 2011 (2011-11-20), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047469897, ISSN: 0302-9743 ISBN: 978-3-642-40759-8 | 1-5,13, 14 | INV. G06T5/00 G06T5/20 |
| Y | * abstract * * Section 2 * | 6-8,11, 12 | |
| A | * Section 4 * | 9,10 | |
| | ----- | | |
| X | US 2018/089806 A1 (BITTERLI BENEDIKT MARTIN [US] ET AL) 29 March 2018 (2018-03-29) | 1-5,9-14 | |
| Y | * abstract * * figures 1-6 * * paragraph [0002] * * paragraph [0026] - paragraph [0034] * * paragraph [0045] - paragraph [0051] * | 6-8 | TECHNICAL FIELDS SEARCHED (IPC) |
| | ----- | | G06T |
| Y | US 2015/262336 A1 (JIN HAILIN [US] ET AL) 17 September 2015 (2015-09-17) | 6 | |
| A | * abstract * * figures 3,4 * | 1-5,7-14 | |
| | ----- | | |
| Y | EP 2 216 984 A1 (OLYMPUS CORP [JP]) 11 August 2010 (2010-08-11) | 7,8 | |
| A | * abstract * * paragraph [0018] - paragraph [0115] * * paragraph [0130] * * figures 1-25 * | 1-6,9-14 | |
| | ----- | | |
| | -/-- | | |

The present search report has been drawn up for all claims

| Place of search | Date of completion of the search | Examiner |
|---|---|---|
| Munich | 30 October 2018 | Tessens, Linda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 18 30 5592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 851 867 A2 (THOMSON LICENSING [FR]) 25 March 2015 (2015-03-25) | 11,12 | |
| A | * the whole document * | 1-10,13, 14 | |

-----

TECHNICAL FIELDS
SEARCHED      (IPC)

The present search report has been drawn up for all claims

| Place of search | Date of completion of the search | Examiner |
|---|---|---|
| Munich | 30 October 2018 | Tessens, Linda |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 30 5592

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2018

| Patent document cited in search report | | | Publication date | Patent family member(s) | | | Publication date |
|---|---|---|---|---|---|---|---|
| US 2018089806 | A1 | | 29-03-2018 | NONE | | | |
| US 2015262336 | A1 | | 17-09-2015 | US | 2015262336 | A1 | 17-09-2015 |
| | | | | US | 2016191753 | A1 | 30-06-2016 |
| EP 2216984 | A1 | | 11-08-2010 | CN | 101868966 | A | 20-10-2010 |
| | | | | EP | 2216984 | A1 | 11-08-2010 |
| | | | | JP | 5052301 | B2 | 17-10-2012 |
| | | | | JP | 2009130537 | A | 11-06-2009 |
| | | | | US | 2010225790 | A1 | 09-09-2010 |
| | | | | WO | 2009066603 | A1 | 28-05-2009 |
| EP 2851867 | A2 | | 25-03-2015 | CN | 104463819 | A | 25-03-2015 |
| | | | | EP | 2851867 | A2 | 25-03-2015 |
| | | | | JP | 2015060593 | A | 30-03-2015 |
| | | | | KR | 20150032822 | A | 30-03-2015 |
| | | | | US | 2015086128 | A1 | 26-03-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HE et al.** IEEE Transactions on Pattern Analysis and Machine Intelligence. *Guided Image Filtering,* 2013, vol. 3
- **HORENTRUP et al.** Confidence-aware guided image filter", Image Processing (ICIP). *IEEE International Conference,* 2014
- A global sampling method for alpha matting. **HE et al.** Computer Vision and Pattern Recognition (CVPR), 2011 IEEE Conference on. IEEE, 2011